# EUROPEAN PATENT SPECIFICATION

(11) **EP 3 736 098 B1**
(45) Date of publication and mention of the grant of the patent: **23.03.2022**
(21) Application number: 20173979.4
(22) Date of filing: 11.05.2020
(51) Int. Cl.: B29C 39/06, B29C 39/10, B29C 39/26, B29C 33/30

(54) **METHOD FOR CREATING CARGO CARRYING PLATFORMS USED WITH AUTOMATED GUIDED VEHICLE ROBOTS**
VERFAHREN ZUR ERSTELLUNG VON CARGO-TRÄGERPLATTFORMEN, DIE MIT AUTOMATISIERTEN GEFÜHRTEN FAHRZEUGROBOTERN VERWENDET WERDEN
PROCEDE DE CREATION DE PLATEFORMES DE TRANSPORT DE CHARGES UTILISEES AVEC DES ROBOTS DE VEHICULES GUIDES AUTOMATIQUES

(30) Priority: 10.05.2019 GB 201906618
(43) Date of publication of application: 11.11.2020
(73) Proprietor: Arrival Limited, London W14 8TS (GB)
(72) Inventor: KOZLENOK, Aleksandr, London, W14 8TS (GB)
(74) Representative: Korenberg, Alexander Tal

(56) References cited:
- CN-A- 108 326 278
- CN-U- 208 813 305
- JP-A- H01 226 546
- JP-U- H0 591 815
- KR-A- 20180 007 964
- US-A1- 2013 299 375

## Description

### Background

In robotized manufacturing, systems must be configured with the consideration of the physical operations of the technological process, product design, and assembly optimizations. Robotized manufacturing can include automatic guided vehicles (AGVs), most often used in industrial applications to move objects around a manufacturing facility or warehouse. The objects are placed on platforms mounted on the AGVs, the AGVs can move to a destination, then the objects are removed from the platforms. US 2013/299375 A1 discloses the molding of a packaging box wherein the cavity of the mold is of a splicing structure.

At the destination locations, the objects can be removed from the platform by robots which must identify their positions on the platforms. Thus, placing the objects on the platform and maintaining their positions can be important for detection by the robots. A problem with platforms can be having platforms that are sized improperly to support the objects, and the resulting movement of the objects on the platform which can occur during the transportation movement by the AGVs. What is needed is an improved method for creating platforms which can carry objects securely.

### Summary

The present disclosure is directed to a method for creating a custom cargo carrying platform which is placed on AGVs. The custom cargo carrying platform is made using a molding process. A mold is formed from a base and slats mounted around the base, defining a perimeter shape for the cargo carrying platform. Couplings for AGVs and insert structures which are used to form recesses in the cargo carrying platform are also attached to the base. A mold release is applied to the mold surfaces.

A liquid platform material is poured into the mold and flows into a volume defined by the slats and the base and around the insert structures. The liquid platform material hardens in the mold. The hardened material is removed from the mold and the insert structures are removed from the hardened material to create the custom cargo carrying platform. The AGV couplings are on a lower surface of the custom cargo carrying platform and the AGVs are attached to couplings on upper center portions of the AGVs. Objects that match the shape of the recess can be placed in the cargo carrying platform and moved to a destination in a factory by the AGVs.

The AGVs have two wheels mounted on opposite sides of the AGV which are driven by motors. A controller controls the motors and directs the movement of the AGVs and the cargo carrying platform. Objects are placed in the recesses formed by the insert structures and securely held so that they do not move relative to the cargo carrying platform.

In a basic configuration, the custom cargo carrying platform is supported by a forward AGV and a rear AGV. However, in other embodiments, the custom cargo carrying platform can be supported by more than two AGVs. For example, a rectangular cargo carrying platform can be supported by four AGVs, one AGV supporting each corner of the cargo carrying platform. The recesses can be slightly larger than the objects being transported so that the parts or materials can be easily inserted and removed.

### Brief Description of the Drawings

FIG. 1 illustrates a perspective view of a mold for forming an AGV cargo carrying platform.
FIG. 2 illustrates a perspective bottom view of part forms used for creating recesses in the platform.
FIG. 3 illustrates a top view of a mold base with slats and part form position markings.
FIG. 4 illustrates a top perspective view of a mold base with slats.
FIG. 5 illustrates a cross section perspective view of a platform with part recesses and AGV couplings.
FIG. 6 illustrates a cross section side view of an embodiment of an AGV coupling in a platform.
FIG. 7 illustrates a cross section side view of an embodiment of an AGV coupling in a platform with an AGV coupling.
FIG. 8 illustrates a top perspective view of a platform mounted on two AGVs with parts placed in recesses in the platform.
FIGS. 9 and 10 illustrate front views of AGVs.

### Detailed Description

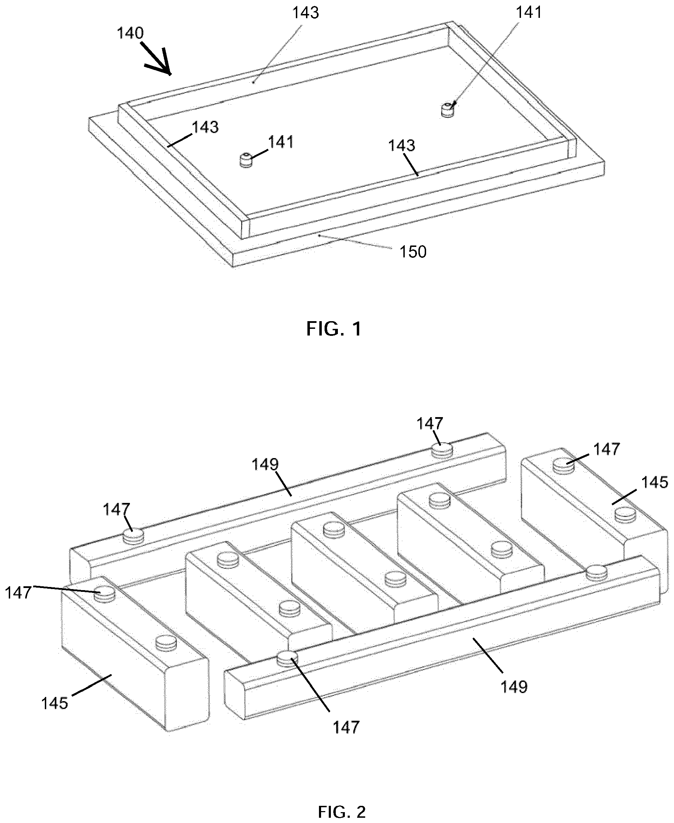

The present disclosure details a method for creating a custom cargo carrying platform which is mounted on AGVs. The custom cargo carrying platform is made using a molding process. FIG. 1 illustrates an embodiment of a mold 140 used to create a custom cargo carrying platform. The mold 140 has a base 150. In this example, the base 150 is planar and rectangular in shape. The base 150 can be made of a metal which is coated with a non-stick material such as plastic which allows the mold material to be easily removed from the mold.

The base 150 can be a smooth or engraved surface or plate. When liquid platform material is poured onto a base 150 which has been engraved or marked, the design of the engraving or marking is transferred to the lower surface of the finished custom cargo carrying platform in a mirror-like form. In an embodiment, the transferred markings allow the custom cargo carrying platform to be properly positioned using optical sensors in the ground. For example, the transferred markings can be ArUco markers or other markings which are used to precisely detect the position and orientation of the cargo carrying platform. ArUco markers are synthetic square marker composed by a wide black border and an inner binary matrix which determines its identifier. The black border facilitates fast detection by optical sensors in the image and the binary codification allows the marker identification to be determined. Transferred markings on the cargo carrying platform can also be used to determine the orientation and position of components such as couplings, insert structures, or other devices on the cargo carrying platform.

The perimeter of the mold 140 is defined by four slats 143 which are joined to create a mold volume. The mold is sized to fit the required parts or materials that are going to be transported by the custom cargo carrying platform. The slats 143 are made of metal or other solid materials used to form the perimeter dimensions of the cargo carrying platform. The slats 143 have different lengths depending on the required dimensions of the cargo carrying platform. The mold 140 is used to create one or more cargo carrying platforms. In an embodiment, the slats 143 have integrated or recessed permanent magnets which magnetically attach the slats 143 to the base. In an embodiment, the magnets in the slats 143 are neodymium magnets. The joints between the slats 143and the base 140 are sealed to prevent the liquid platform material from seeping out of the mold 140. For example, the joining surfaces between the adjacent slats 143 and base 150 are sealed with wax or any other suitable material which can seal and temporarily bond the slats 143 and base 150. The wax seals are melted or broken to separate the slats 143 from the base 150. Once the required number of cargo carrying platforms are formed, the slats 143 are removed from the base 140 and the mold components are reused for different mold 140 designs.

The mold 140 also has mechanisms for holding the AGV couplings to the bottom of the mold 140. In this example, pins 141 are used to hold the AGV couplings in place when a liquid platform material is poured into the mold 140 and prevent the liquid platform material from flowing into a center portion of the AGV couplings. The pins 141 hold the AGV couplings to the base 150 of the mold with friction, magnetic attraction, releasable adhesives, etc. In an embodiment, the pins 141 include neodymium magnets. The pins 141 serve as guides when installing the AGV couplings on the surface of the base 140 which are used for attaching the AGVs to the cargo carrying platform. The base 150 includes a metal material that magnetically attracts the mold components such as the slats 143, the coupling pins 141.

The custom cargo carrying platform has recesses which are designed to hold specific objects shapes. These recesses are formed by attaching insert structures to the base 150 of the mold 140. FIG. 2 illustrates a bottom view of a plurality of insert structures 145, 149 which are used to create recesses in the custom cargo carrying platform. In this example, there are five rectangular insert structures 145 and two rectangular insert structures 149 which are longer than the insert structures 145. The insert structures 145, 149 are attached to standoffs 147 which are disc shaped permanent magnets such as neodymium magnets. The insert structures 145, 149 and magnet standoffs 147 are magnetically attached to the metal base of the mold. Multiple standoffs 147 are stacked to adjust the gap between the top of the base 150 and the bottoms of the insert structures 145, 149 so that the liquid platform material can flow between the base and the insert structures 145, 149.

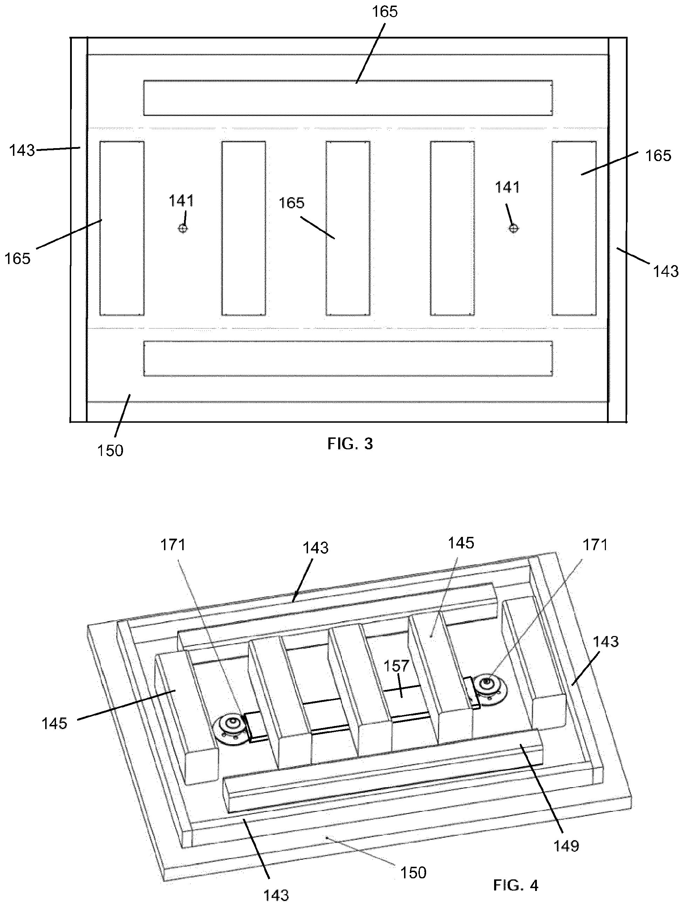

FIG. 3 illustrates an embodiment of a top view of a base 150 and the slats 143 arranged in a rectangular mold. The pins 141 are secured to the base 150 and the base 150 has makings 165 which indicate the locations of the insert structures. FIG. 4 illustrates a perspective top view of the mold base 150 with slats 143. The AGV couplings 171 have been placed over the pins 141. The AGV couplings 171 have flanges which each have a lower planar surface with holes which help bind the AGV couplings 171 to the platform material. The insert structures 145, 149 and standoffs have also been attached to the base 150 over the marked locations. The base 150, insert structures 145, 149 and standoffs are coated with a mold release agent which is a chemical used to prevent the liquid platform material from bonding to these structural surfaces when it hardens. Without the mold release agent, the platform material would become fused to the mold surfaces, resulting in difficult clean-up and dramatic loss in production efficiency.

It is desirable to increase the structural strength of the cargo carrying platform for heavy part applications. In an embodiment, the cargo carrying platform includes a strengthening structure. In the illustrated example, a high strength structural member 157 is positioned between the AGV couplings 171 below some of the insert structures 145 between the standoffs.

The liquid platform material is poured into the mold. The liquid platform material flows onto the base 150 within an area surrounded by the slats 143. The liquid platform material flows over the AGV couplings 171 and around the standoffs. The insert structures 145, 149 extend upward from the base 150 and the liquid platform material flows under the insert structures 145, 149 and partially up the vertical side perimeter surfaces of the insert structures 145, 149. The liquid platform material hardens in the mold to form the cargo carrying platform. The hardened cargo carrying platform is removed from the mold and the insert structures 145, 149 and standoffs are removed from the hardened cargo carrying platform.

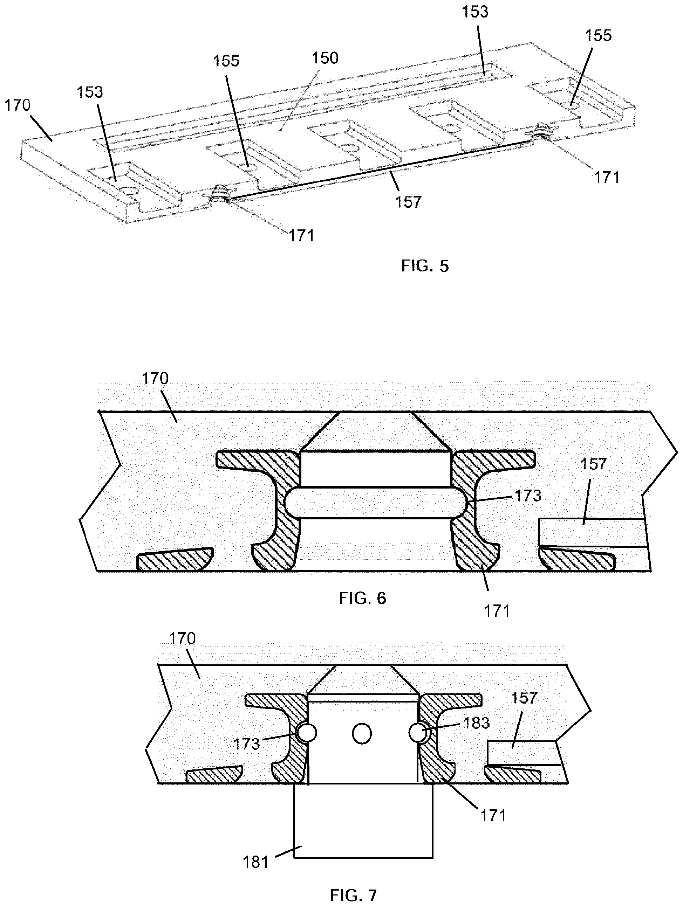

FIG. 5 illustrates a cross section of cargo carrying platform 170 after it has hardened, been removed from the mold, and the mold release agent coated insert structures and offsets have been removed. Part recesses 153 are formed in the cargo carrying platform 170 and standoff holes 155 are formed where the standoffs were removed from the cargo carrying platform 170. The AGV couplings 171 and the strengthening structure 157 are surrounded by the hardened platform material and integrated into the cargo carrying platform 170. The AGV couplings 171 and the strengthening structure 157 are not covered with the mold release agent and are bonded to the hardened platform material.

The cargo carrying platform 170 can be made from various materials. For example, the cargo carrying platform 170 can be made of a homogeneous thermoplastic polymer material which is heated to a liquid state prior to being poured into the mold. The thermoplastic polymer material is then cool and harden before being removed from the mold. In another embodiment, the cargo carrying platform 170 is made of two-part polymer materials such as epoxies or polyesters. The epoxy or polyester resin is mixed with a hardener in the proper ratio and poured into the mold. The hardener reacts with the resin to create cross links in the resin which hardens the polymer liquid into a sold material. In some embodiments, glass, aramid, carbon, or other suitable high strength fibers are mixed with the liquid platform material. The fibers are evenly and randomly dispersed within the hardened platform material and the fiber reinforcement improves the strength of the cargo carrying platform 170.

The couplings for the AGVs are on a lower surface of the custom cargo carrying platform 170 and the AGVs are attached to the couplings. The couplings are attached to connection units on an upper center portion of the AGVs. The custom cargo carrying platform can be supported by any number of AGVs. In a basic embodiment, the custom cargo carrying platform is supported by a forward AGV and a rear AGV. However, in other embodiments, the custom cargo carrying platform is supported by a plurality of AGVs.

Couplings within the cargo carrying platform allow for secure attachment to AGVs. FIG. 6 illustrates a cross section of the AGV coupling 171 in the cargo carrying platform 170. As discussed, the liquid platform material flows through holes in the AGV coupling 171 and the hardened liquid platform material is rigidly secured to the cargo carrying platform 170. The AGV coupling 171 has an inner concave cylindrical surface with a recessed circular groove 173. In an embodiment, the AGVs have cylindrical coupling structures that extend upward from the top surfaces of the AGVs that are secured to the AGV couplings 171. The AGVs are moved to an assembly location and the AGV couplings 171 are placed over the cylindrical coupling structures.

In other embodiments, the couplings are coupled with an insert which fits into a cylindrical hole in the upper surface of the AGVs. FIG. 7 illustrates a coupling insert 181 placed in the coupling 171 of the cargo carrying platform 170. The coupling insert 181 includes protrusions 183 which are retracted so that the coupling insert 181 is inserted into the coupling 171. When fully inserted, the protrusions 183 extend outward to engage the recessed circular groove 173 in the coupling 171, holding the coupling inserts 181 in place on the lower surface of the cargo carrying platform 170. The AGVs are moved to an assembly location and the coupling insert 181 on the underside of the cargo carrying platform 170 are placed into the cylindrical holes in the upper surface of the AGVs.

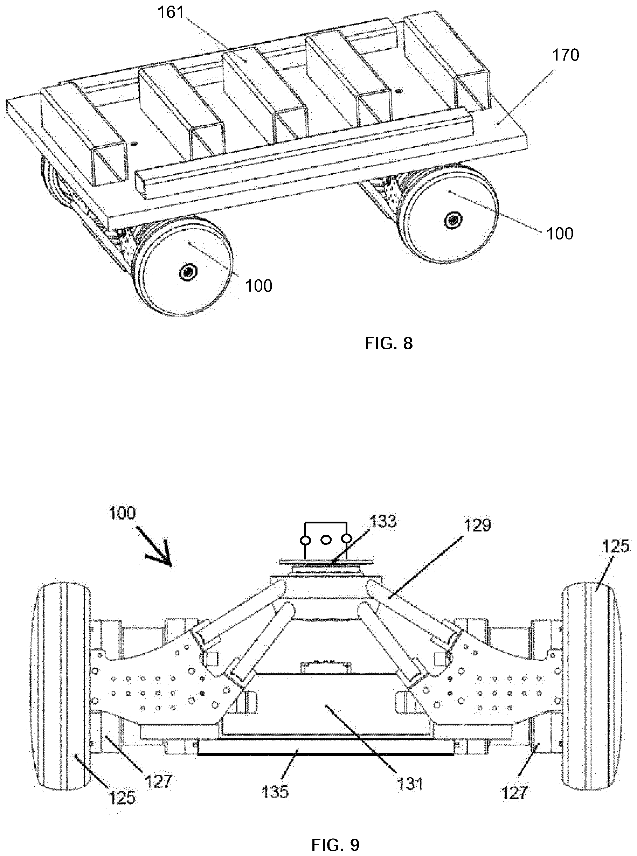

FIG. 8 illustrates an embodiment of a cargo carrying platform 170 coupled to two AGVs 100. The AGVs 100 have moved the cargo carrying platform 170 to a part loading area. A robot can place parts 161 in each of the recesses in the upper surface of the cargo carrying platform 170. The parts 161 can fit securely in the recesses so that they don't move on the cargo carrying platform 170 when the AGVs 100 move. In the illustrated embodiment, the AGVs 100 have two wheels mounted on opposite sides of the AGV which are driven by motors. A controller controls the motors and directs the movement of the AGVs and the cargo carrying platform. In other embodiments, any other type of AGV can be used with the cargo carrying platform 170.

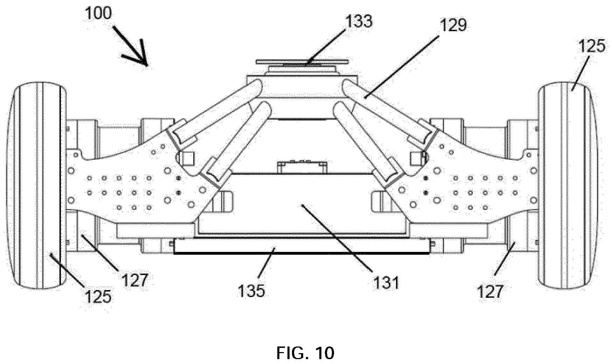

With reference to FIGS. 9 and 10, front views of AGVs 100 are illustrated. FIG. 9 illustrates an AGV 100 which has a coupling that extends upward from the top of the AGV 100 and is coupled to the coupling 171 shown in FIG. 6. FIG. 10 illustrates an AGV 100 that has a cylindrical hole in the upper surface of the AGV 100 which is coupled to the coupling insert 181 shown in FIG. 7.

The AGVs 100 have two wheels 125 which are driven by motors 127 coupled to an AGV frame 129. In an embodiment, the motors 127 are permanent magnet synchronous motors (PMSMs) or any other suitable motor. The AGV frame 129 has a connection unit 133 and an open lower portion which holds a power pack 131 with a receiver coil on a lower surface. The upper center portion of the AGVs 100 has a connection unit 133 which is a load bearing hitch used to couple the AGVs 100 to trailers, or platforms for supporting objects, or to other AGVs 100, etc.

Downward forces are transmitted through the connection unit 133 and the frame 129 to the wheels 125. In an embodiment, the downward force on the connection units 133 results in an outward side stretching force through the frame 129 to the wheels 125. One means for compensating for the negative effects of the side stretching of the frame 129 is to incorporate a lower link 135 coupled to the main frame 129. Such a lower link 135 functions as a structural element in the central lower portion of the frame that is rigid in tension and resists elongation of the frame 129 and prevents outward side stretching. In addition to being a structural element of the frame 129, the lower link 135 is a core of the receiver coil.

The motors 127 are powered by rechargeable batteries in the power pack 131 and controlled by a motor controller. The motor controllers include a main controller circuit and electrical power switching mechanisms. For example, the motor controllers include a general purpose central processing unit (CPU) such as an Arduino controller and general purpose input/output (GPIO) mounted drivers.

The CPU serves as a computational resource for AGV localization and navigation algorithms. The AGVs 100 also include communication means to communicate with wireless networks. For example, the communications mechanism is a radio frequency (RF) device such as a Wi-Fi mechanism or any other RF communications transceiver system. In an embodiment, an AGV control system transmits navigational controls to a plurality of AGVs 100 and each of the AGVs 100 transmits location information back to the AGV control system for feedback on the locations of the plurality of AGVs 100.

The power pack 131 of the AGVs 100 includes batteries and a battery monitoring system. Because the batteries have a heavy weight, they are mounted below the center of rotation or the rotational axis of the wheels 125. The weight of the batteries helps to passively keep the AGVs 100 in the upright position. The batteries are charged by moving the AGV 100 over a charging station so that the batteries are wirelessly charged.

A connection unit 133 is mounted to the center of the upper surface of the AGV frame 129. The connection unit 133 is a rotational coupling which rotates freely about the vertical Z axis. The connection unit 133 can be coupled to other objects such as a coupling insert (shown in FIG. 7) and used as a towing connection for the AGV 100.

The electric motors 127 are connected to the wheels 125 directly or coupled to a planetary gear assembly which is coupled to the wheels 125. In an embodiment, the planetary gear assembly consists of sun and planet gears mounted so that the center of the planet gear revolves around the center of the sun gear. The planetary gearing reduces the rotational velocity of the electric motors 127 transmitted to the wheels 125.

In an embodiment, the AGV 100 has a brake system which can have various implementations. For example, the AGV 100 has an integrated vision or object detection mechanism. When an imminent collision is detected, the AGV 100 actuates a brake mechanism to stop the movement of the AGV 100 immediately.

When the proposed dual-wheeled AGV robot platform is used as a single unit, the vertical position must be guaranteed. Two types of stabilization are used: passive and active. Passive stabilization is ensured by the device composition, when the center of mass of the robot is below the axis of the wheels. This arrangement allows the AGV to move with relatively small acceleration with a load (actual value depends on the particular implementation) causing no significant shift to the center of mass (value depends on implementation but should be not more than the weight of the mass below the axis) and thus does not cause the robot to overturn. To assure passive stabilization, the moment of inertia of the robot must be higher than the moment on the driving wheels, which allows the robot to be a pendulum and its resting state is determined by the position of the center of mass.

Active stabilization is necessary when a payload shifts the center of mass of the system above the axis of the driving wheels. The system is balanced by impulse control of the driving wheel motors, and the data on the position of the robot in space is determined by means of an inertial measurement unit (IMU). In some implementations, the gyroscopic module is used for this purpose. In cheaper implementations, the torque is controlled by balancing the driving wheels' acceleration.

In an embodiment, the AGV 100 has a stabilization system which is part of the motor controller. The stabilization system includes accelerometers which are used to detect the orientation of the AGV 100. For example, the accelerometers are mounted in an X axis (horizontal forward) and Z axis (vertical) orientation to detect the vertical or upright angle of the AGV 100. If the vertical angle of the AGV 100 is not within a predetermined range of angles, the motor controllers adjust the movement of the wheels 125 to correct the vertical upright angle of the AGV 100 and prevent the AGV 100 from overturning. For example, the controller can require the AGV 100 to be within 10 or less degrees of 90 degrees upright. If the AGV 100 is rotated too far back or forward about the Y axis (horizontal parallel with axis of rotation of wheels 125) while the AGV 100 is moving, the motor controller(s) adjust the rotational speeds of the motors 127 and wheels 125 so that the AGV 100 will return to an upright position with the frame 129 in a horizontal position within the predetermined angle range.

In another embodiment, the AGV 100 is also gyrostabilized and has a gyroscope which can be a rotating disk coupled to a gyroscope motor. The gyroscope consists of any mass, typically a disc or wheel coupled to a motor. The gyroscope is mounted around a portion of the frame. The rotating disc maintains its orientation and automatically counteracts unwanted rotary movements of the frame 129 and AGV 100 about the vertical Z axis. In other embodiments, the gyroscope is mounted within the frame 129.

In addition to or as an alternative mechanism to balance the AGV 100, tilt sensors and/or gyroscopic sensors detect the angle and rotational movement of the AGV 100. The tilt sensors and gyroscopic sensors communicate with a processor controller which control motors 127 that rotate the wheels 125 which are driven forward or backward as needed to return the pitch of the AGV 100 to an upright position. In some embodiments, the AGV 100 use brushless DC electric motors coupled to each wheel which are powered by lithium-ion or other rechargeable batteries in the power pack 131. The sensors detect the vertical or upright angle of the AGV 100. If the vertical angle of the AGV 100 is not within a predetermined range of angles, the motor controller adjusts the movement of the wheels to correct the vertical angle of the AGV 100 and prevent the AGV body or frame 129 from overturning.

A further alternative balance mechanism includes accelerometer sensors. The accelerometer sensors are configured in a vertical and horizontal orientation and the outputs of the vertical and horizontal accelerometer sensors are used to determine the vertical angle of the AGV 100. If the AGV 100 is leaning back too far while the AGV 100 is moving, the motor controller slows the motors 127 and wheels 125 so that the deceleration force will cause the AGV 100 to rotate about the axis of the wheels 125, bringing the AGV 100 to a more upright position within the predetermined vertical angle range.

While the present disclosure has been described with two wheeled AGVs, in other embodiments, the described system and methods can be used with any AGVs or other electrical vehicles such as human driven or driverless vehicles such as cars, buses, planes, vehicles that travel on tracks such as railroad cars, toys, or any movable electrical equipment and tooling, etc. The present disclosure, in various embodiments, includes components, methods, processes, systems and/or apparatus substantially as depicted and described herein, including various embodiments, sub-combinations, and subsets thereof. Those of skill in the art will understand how to make and use the present disclosure after understanding the present disclosure. The present disclosure, in various embodiments, includes providing devices and processes in the absence of items not depicted and/or described herein or in various embodiments hereof, including in the absence of such items as may have been used in previous devices or processes, e.g., for improving performance, achieving ease and/or reducing cost of implementation. Rather, as the following claims reflect, inventive aspects lie in less than all features of any single foregoing disclosed embodiment.

## Claims

1. A method for creating a cargo carrying assembly, the method comprising:
providing a mold (140) having a base (150) and a perimeter defining an internal volume;
attaching a first coupling (171) and a second coupling (171) to the base;
attaching standoffs (147) to the base, wherein the standoffs are attached to the bottom of an insert structure (145, 149);
pouring a liquid platform material into the mold;
hardening the liquid platform material to form a recess (153, 155) around the standoffs and the insert structure to form a cargo carrying platform (170);
removing the cargo carrying platform from the mold and removing the insert structure from the cargo carrying platform;
**characterised by**
attaching a first automatic guided vehicle, AGV, (100) having a first pair of wheels (125) to the first coupling; and
attaching a pair of wheels (125) to the second coupling.

2. The method of claim 1, wherein the standoffs comprise magnetic spacers coupled to a bottom surface of the insert structure wherein the base is planar and made of a ferrous material and wherein the insert structure is attached to the base with a magnetic force from the magnetic spacers.

3. The method of any preceding claim, further comprising:
providing a first coupling pin (141) which holds the first coupling to the base; and
providing a second coupling pin (141) which holds the second coupling to the base.

4. The method of any preceding claim, wherein the perimeter of the mold is rectangular in shape.

5. The method of any preceding claim, further comprising:
attaching slats (143) to the base to form the perimeter of the mold.

6. The method of any preceding claim, further comprising:
heating a polymer to form the liquid platform material prior to pouring the liquid platform material into the mold.

7. The method of any of claims 1-5, further comprising:
mixing a first liquid component with a second liquid component to form the liquid platform material prior to pouring the liquid platform material into the mold.

8. The method of any preceding claim, wherein the first coupling and the second coupling have annular interior surfaces within the cargo carrying platform.

9. The method of any of claims 1-7, wherein the first coupling and the second coupling are cylindrical structures which extend down from the cargo carrying platform.

10. The method of any preceding claim, further comprising:
placing a cargo structure into the recess in the cargo carrying platform formed by the insert structure wherein surfaces of the recess prevent the cargo structure from moving on the cargo carrying platform.

11. The method of any preceding claim, further comprising:
attaching a second automatic guided vehicle (100) to the second coupling wherein the second pair of wheels are components of the second automatic guided vehicle.

12. The method of any preceding claim, further comprising:
placing a structural member (157) in the mold adjacent to the first coupling and the second coupling prior to pouring the liquid platform material into the mold;
wherein the liquid platform material surrounds the structural member.

13. The method of any preceding claim, further comprising:
mixing the liquid platform material with a plurality of fibers wherein the cargo carrying platform is formed from a fiber reinforced polymer.

14. The method of any preceding claim, further comprising:
detaching the first AGV from the first coupling;
detaching the pair of wheels from the second coupling;
heating the cargo carrying platform to form the liquid platform material; and
separating the first coupling and the second coupling from the liquid platform material.

## Patentansprüche

1. Verfahren zum Erstellen einer Ladungsträgeranordnung, wobei das Verfahren Folgendes umfasst:
Vorsehen einer Form (140), die eine Basis (150) und einen Umfang, die einen Innenraum definieren, aufweist;
Befestigen einer ersten Kupplung (171) und einer zweiten Kupplung (171) an der Basis;
Befestigen von Abstandhaltern (147) an der Basis, wobei die Abstandhalter am Boden einer Einsatzstruktur (145, 149) befestigt sind;
Gießen eines flüssigen Plattformmaterials in die Form;
Aushärten des flüssigen Plattformmaterials, um eine Vertiefung (153, 155) um die Abstandhalter und die Einsatzstruktur auszubilden, um eine Ladungsträgerplattform (170) auszubilden;
Entfernen der Ladungsträgerplattform aus der Form und Entfernen der Einsatzstruktur aus der Ladungsträgerplattform;
**gekennzeichnet durch**
Befestigen eines ersten fahrerlosen Transportfahrzeugs, FTF, (100), das ein erstes Paar Räder (125) aufweist, an der ersten Kupplung und
Befestigen eines Paars Räder (125) an der zweiten Kupplung.

2. Verfahren nach Anspruch 1, wobei die Abstandhalter magnetische Abstandhalter umfassen, die mit einer Bodenfläche der Einsatzstruktur gekoppelt sind, wobei die Basis plan ist und aus einem eisenhaltigen Material besteht und wobei die Einsatzstruktur mittels einer Magnetkraft von den magnetischen Abstandhaltern an der Basis befestigt ist.

3. Verfahren nach einem der vorstehenden Ansprüche, ferner Folgendes umfassend:
Vorsehen eines ersten Kupplungsbolzens (141), der die erste Kupplung an der Basis hält; und
Vorsehen eines zweiten Kupplungsbolzens (141), der die zweite Kupplung an der Basis hält.

4. Verfahren nach einem der vorstehenden Ansprüche, wobei der Umfang der Form rechteckig ist.

5. Verfahren nach einem der vorstehenden Ansprüche, ferner Folgendes umfassend:
Befestigen von Leisten (143) an der Basis, um den Umfang der Form auszubilden.

6. Verfahren nach einem der vorstehenden Ansprüche, ferner Folgendes umfassend:
Erwärmen eines Polymers, um das flüssige Plattformmaterial auszubilden, vor dem Gießen des flüssigen Plattformmaterials in die Form.

7. Verfahren nach einem der Ansprüche 1-5, ferner Folgendes umfassend:
Vermischen einer ersten flüssigen Komponente mit einer zweiten flüssigen Komponente, um das flüssige Plattformmaterial auszubilden, vor dem Gießen des flüssigen Plattformmaterials in die Form.

8. Verfahren nach einem der vorstehenden Ansprüche, wobei die erste Kupplung und die zweite Kupplung ringförmige Innenflächen innerhalb der Ladungsträgerplattform aufweisen.

9. Verfahren nach einem der Ansprüche 1-7, wobei die erste Kupplung und die zweite Kupplung zylindrische Strukturen sind, die sich von der Ladungsträgerplattform nach unten erstrecken.

10. Verfahren nach einem der vorstehenden Ansprüche, ferner Folgendes umfassend:
Platzieren einer Ladungsstruktur in der Vertiefung in der Ladungsträgerplattform, die durch die Einsatzstruktur ausgebildet wurde, wobei Flächen der Vertiefung verhindern, dass sich die Ladungsstruktur auf der Ladungsträgerplattform bewegt.

11. Verfahren nach einem der vorstehenden Ansprüche, ferner Folgendes umfassend:
Befestigen eines zweiten fahrerlosen Transportfahrzeugs (100) an der zweiten Kupplung, wobei das zweite Paar Räder Komponenten des zweiten fahrerlosen Transportfahrzeugs sind.

12. Verfahren nach einem der vorstehenden Ansprüche, ferner Folgendes umfassend:
Platzieren eines Strukturelements (157) an die erste Kupplung und die zweite Kupplung angrenzend in der Form vor dem Gießen des flüssigen Plattformmaterials in die Form;
wobei das flüssige Plattformmaterial das Strukturelement umgibt.

13. Verfahren nach einem der vorstehenden Ansprüche, ferner Folgendes umfassend:
Vermischen des flüssigen Plattformmaterials mit mehreren Fasern, wobei die Ladungsträgerplattform aus einem faserverstärkten Polymer ausgebildet ist.

14. Verfahren nach einem der vorstehenden Ansprüche, ferner Folgendes umfassend:
Lösen des ersten FTF von der ersten Kupplung;
Lösen des Paars Räder von der zweiten Kupplung;
Erwärmen der Ladungsträgerplattform, um das flüssige Plattformmaterial auszubilden; und
Trennen der ersten Kupplung und der zweiten Kupplung vom flüssigen Plattformmaterial.

## Revendications

1. Procédé de création d'un ensemble de transport de charges, le procédé comprenant :
la fourniture un moule (140) ayant une base (150) et un périmètre définissant un volume interne ;
la fixation un premier accouplement (171) et d'un second accouplement (171) à la base ;
la fixation d'entretoises (147) à la base, les entretoises étant fixées au fond d'une structure d'insert (145, 149) ;
le versement d'un matériau de plateforme liquide dans le moule ;
le durcissement du matériau de plateforme liquide pour former un évidement (153, 155) autour des entretoises et de la structure d'insert pour former une plateforme de transport de charges (170) ;
le retrait de la plateforme de transport de charges du moule et le retrait de la structure d'insert de la plateforme de transport de charges ;
**caractérisé par**
la fixation d'un premier véhicule guidé automatique, AGV, (100) ayant une première paire de roues (125) au premier accouplement ; et
la fixation d'une paire de roues (125) au second accouplement.

2. Procédé selon la revendication 1, la fourniture comprenant
des entretoises magnétiques accouplées à une surface inférieure de la structure d'insert, la base étant plane et faite d'un matériau ferreux et la structure d'insert étant fixée à la base avec une force magnétique provenant des entretoises magnétiques.

3. Procédé selon l'une quelconque des revendications précédentes, comprenant en outre :
la fourniture d'une première broche d'accouplement (141) qui maintient le premier accouplement à la base ; et
la fourniture d'une seconde broche d'accouplement (141) qui maintient le second accouplement à la base.

4. Procédé selon l'une quelconque des revendications précédentes, le périmètre du moule étant de forme rectangulaire.

5. Procédé selon l'une quelconque des revendications précédentes, comprenant en outre :
la fixation de barres (143) à la base pour former le périmètre du moule.

6. Procédé selon l'une quelconque des revendications précédentes, comprenant en outre :
le chauffage d'un polymère pour former le matériau de plateforme liquide avant de verser le matériau de plateforme liquide dans le moule.

7. Procédé selon l'une quelconque des revendications 1 à 5, comprenant en outre :
le mélange d'un premier composant liquide avec un second composant liquide pour former le matériau de plateforme liquide avant de verser le matériau de plateforme liquide dans le moule.

8. Procédé selon l'une quelconque des revendications précédentes, le premier accouplement et le second accouplement ayant des surfaces intérieures annulaires à l'intérieur de la plateforme de transport de charges.

9. Procédé selon l'une quelconque des revendications 1 à 7, le premier accouplement et le second accouplement étant des structures cylindriques qui s'étendent vers le bas à partir de la plateforme de transport de charges.

10. Procédé selon l'une quelconque des revendications précédentes, comprenant en outre :
le placement d'une structure de charge dans l'évidement de la plateforme de transport de charges formé par la structure d'insert, les surfaces de l'évidement empêchant la structure de charge de se déplacer sur la plateforme de transport de charges.

11. Procédé selon l'une quelconque des revendications précédentes, comprenant en outre :
la fixation d'un second véhicule guidé automatique (100) au second accouplement, la seconde paire de roues étant des composants du second véhicule guidé automatique.

12. Procédé selon l'une quelconque des revendications précédentes, comprenant en outre :
le placement d'un élément structurel (157) dans le moule adjacent au premier accouplement et au second accouplement avant de verser le matériau de plateforme liquide dans le moule ;
le matériau de plateforme liquide entourant l'élément structurel.

13. Procédé selon l'une quelconque des revendications précédentes, comprenant en outre :
le mélange du matériau de plateforme liquide avec une pluralité de fibres, la plateforme de transport de charges étant formée d'un polymère renforcé par des fibres.

14. Procédé selon l'une quelconque des revendications précédentes, comprenant en outre :
le détachement du premier AGV du premier accouplement ;
le détachement de la paire de roues du second accouplement ;
le chauffage de la plateforme de transport de charges pour former le matériau de plateforme liquide ; et
la séparation du premier accouplement et du second accouplement du matériau de plateforme liquide.
